# EUROPEAN PATENT APPLICATION

(11) **EP 4 830 870 A1**
(43) Date of publication of application: **28.10.2026**
(21) Application number: 25204479.7
(22) Date of filing: 25.09.2025
(51) Int. Cl.: B25F 5/00, H01H 9/54, H02H 11/00, H02P 29/024

(54) **POWER TOOL**

(30) Priority: 25.04.2025 CN 202510534476
(71) Applicant: Nanjing Chervon Industry Co., Ltd., Nanjing, Jiangsu 211106 (CN)
(72) Inventor: FENG, Jifeng, Nanjing, Jiangsu 211106 (CN); WU, Xiujian, Nanjing, Jiangsu 211106 (CN)
(74) Representative: Sun, Yiming

(57) **Abstract**

A power tool includes an electric motor; a control module for outputting an electric motor control signal to control the electric motor; a power interface including a first terminal and a second terminal for connecting a power supply; a switch for connecting the power supply to the electric motor.; a first detection module electrically connected to the first terminal of the power interface and used for generating a first electrical signal after the power supply is connected to the power interface; and a second detection module electrically connected to the first terminal of the power interface through the switch and used for generating a second electrical signal when the power supply is connected to the power interface after the switch is turned on. After detecting the second electrical signal, the control module outputs the electric motor control signal according to a detection result of the first electrical signal.

## Description

### TECHNICAL FIELD

The present application relates to the technical field of tool devices and, in particular, to a power tool and a power tool system.

### BACKGROUND

Currently, a handheld power tool, such as a hedge trimmer, may suddenly start when the power supply is connected to the handheld power tool or a battery pack is inserted into the handheld power tool while the switch is turned on, posing a safety hazard.

This part provides background information related to the present application, and the background information is not necessarily the existing art.

### SUMMARY

An object of the present application is to solve or at least alleviate part or all of the preceding problems. Therefore, an object of the present application is to provide a power tool and a power tool system to provide the power-off protection function of the power tool to avoid safety hazards caused by the sudden start-up of the electric motor.

To achieve the preceding object, the present application adopts the technical solutions below.

In a first aspect, the present application provides a power tool. The power tool includes an electric motor, a control module, a power interface, and a switch. The control module is used for outputting an electric motor control signal to control an operation state of the electric motor. The power interface includes a first terminal and a second terminal for connecting a power supply to the power tool. The switch is used for connecting the power supply to the electric motor. The power tool further includes a first detection module electrically connected to the first terminal of the power interface and used for generating a first electrical signal after the power supply is connected to the power interface; and a second detection module electrically connected to the first terminal of the power interface through the switch and used for generating a second electrical signal when the power supply is connected to the power interface after the switch is turned on. After detecting the second electrical signal, the control module outputs the electric motor control signal according to a detection result of the first electrical signal.

In some examples, the first terminal is connected to a first end of the first detection module and connected to a first end of the second detection module through the switch; the second terminal is connected to a second end of the first detection module and a second end of the second detection module; and each of the first detection module and the second detection module has a third end, and the third end of the first detection module and the third end of the second detection module are connected to the control module and used for outputting the first electrical signal and the second electrical signal to the control module, respectively.

In some examples, the first detection module includes a first charging unit and a first charging response unit; the first charging unit is electrically connected to the first terminal of the power interface and used for generating a first voltage after the power supply is connected to the power interface; the first charging response unit is electrically connected to the first charging unit; and after the power supply is connected to the power interface, the first charging response unit outputs the first electrical signal in response to the first voltage generated by the first charging unit. The second detection module includes a second charging unit and a second charging response unit, and the second charging unit is electrically connected to the first terminal of the power interface through the switch and used for connecting the power supply and generating a second voltage after the switch is turned on; the second charging response unit is electrically connected to the second charging unit; and after the power supply is connected to the power interface, the second charging response unit outputs the second electrical signal in response to the second voltage generated by the second charging unit.

In some examples, the first charging response unit includes a first voltage regulator branch electrically connected to the first charging unit and the second terminal; and the first voltage regulator branch is turned on in reverse through the first voltage generated by the first charging unit to stabilize the first voltage generated by the first charging unit within a voltage range receivable by the control module.

The second charging response unit includes a second voltage regulator branch electrically connected to the second charging unit and the second terminal; and the second voltage regulator branch is turned on in reverse through the second voltage generated by the second charging unit to stabilize the second voltage generated by the second charging unit within a voltage range receivable by the control module.

In some examples, the first voltage regulator branch includes a first current limiting resistor and a first Zener diode; an end of the first current limiting resistor is electrically connected to the first charging unit, and the other end of the first current limiting resistor is electrically connected to a cathode of the first Zener diode; and an anode of the first Zener diode is electrically connected to the second terminal. The second voltage regulator branch includes a second current limiting resistor and a second Zener diode; an end of the second current limiting resistor is electrically connected to the second charging unit, and the other end of the second current limiting resistor is electrically connected to a cathode of the second Zener diode; and an anode of the second Zener diode is electrically connected to the second terminal.

In some examples, the first charging response unit further includes a first discharging branch electrically connected to the first charging unit and the second terminal; and the first discharging branch is used for releasing electric charges stored in the first charging unit. The second charging response unit further includes a second discharging branch electrically connected to the second charging unit and the second terminal; and the second discharging branch is used for releasing electric charges stored in the second charging unit.

In some examples, the first charging unit includes at least one first capacitor connected in parallel with each other and having the same capacity. The second charging unit includes at least one second capacitor connected in parallel with each other and having the same capacity.

In some examples, the first electrical signal is a voltage signal or a current signal, and/or the second electrical signal is a voltage signal or a current signal.

In some examples, the parameters of components in the first detection module and the second detection module are the same.

In some examples, the control module is configured to perform the operation below. When the second electrical signal is detected and the first electrical signal is not detected within a first time interval, an electric motor operation signal is outputted to make the electric motor operate according to a target working mode.

In some examples, the control module is configured to perform the operations below. When the second electrical signal is detected and the first electrical signal is detected within a first time interval, the power-on time of the first detection module is determined according to a signal parameter of the first electrical signal. If the power-on time is greater than a second time interval, an electric motor operation signal is outputted to make the electric motor operate according to a target working mode.

In some examples, the control module is configured to perform the operation below. The power-on time of the first detection module is determined according to the signal parameter of the first electrical signal and a signal parameter of the second electrical signal.

In some examples, the control module is configured to perform the operation below. If the power-on time is less than or equal to the second time interval, a safety mode control signal is generated, where the safety mode control signal is used for controlling the electric motor to be in a stop state or a low-speed operation state.

In some examples, after the control module is powered off, the safety mode control signal is eliminated.

In a second aspect, the present application provides a power tool. The power tool includes an electric motor, a control module, a power interface, and a switch. The control module is used for outputting an electric motor control signal to control an operation state of the electric motor. The power interface includes a first terminal and a second terminal for connecting a power supply to the power tool. The switch is used for connecting the power supply to the electric motor. The control module is configured to perform the operations below. Electrical signals at a first detection point and a second detection point are detected, where the first detection point is a position where an electrical signal is generated when the power supply is connected to the power interface, and the second detection point is a position where an electrical signal is generated when the power supply is connected to the power interface and the switch is turned on. A first real-time signal at the first detection point is acquired when the electrical signal at the second detection point is detected. The electric motor control signal is outputted according to the matching condition between the parameter of the first real-time signal and the pre-stored first signal parameter.

In some examples, the first signal parameter is a signal parameter of the electrical signal generated at the first detection point when the power supply is connected to the power interface.

In some examples, the control module is specifically configured to: when the difference between the amplitude of the first real-time signal and the amplitude of the first signal parameter is greater than a first preset value, output an electric motor operation signal to make the electric motor operate according to a target working mode.

In some examples, the control module is configured to adjust the first signal parameter according to the electrical signal at the second detection point.

In some examples, the duration for acquiring the first real-time signal is less than the safety response delay time.

In some examples, the control module is configured to: acquire a second real-time signal at the second detection point and if the parameter of the second real-time signal matches the pre-stored second signal parameter, determine that the electrical signal at the second detection point is detected.

In some examples, the second signal parameter is a signal parameter of the electrical signal generated at the second detection point when the power supply is connected to the power interface and the switch is turned on.

In some examples, the control module is configured to: determine whether the amplitude difference and/or phase difference between the second real-time signal and the second signal parameter are less than a second preset value and when the amplitude difference and/or phase difference between the second real-time signal and the second signal parameter are less than the second preset value, determine that the parameter of the second real-time signal matches the pre-stored second signal parameter.

In some examples, the signal waveform corresponding to the first signal parameter is the same as the signal waveform corresponding to a second signal parameter.

In a third aspect, the present application provides a power tool system. The power tool system includes a power tool. The power tool includes an electric motor and a power supply. The power supply is used for connecting the power tool to supply power to the electric motor. The power tool further includes a switch for connecting an output end of the power supply to the electric motor. The power tool further includes a control module for performing preset processing to adjust an operation state of the electric motor. The control module includes a first detection unit electrically connected to the output end of the power supply and used for generating a first electrical signal after the power supply is connected to the power tool; and a second detection unit electrically connected to the output end of the power supply through the switch and used for generating a second electrical signal when the power supply is connected to the power tool after the switch is turned on. The control module further includes a controller for performing the preset processing to place the electric motor in a safety mode according to a detection result of the first electrical signal after detecting the second electrical signal.

In some examples, the preset processing includes: controlling the power supply to stop supplying power, controlling the switch to be turned off, and/or outputting a safety mode control signal.

The benefit of the present application is described below. The power tool includes an electric motor, a control module, a power interface, and a switch. The control module is used for outputting an electric motor control signal to control an operation state of the electric motor. The power interface includes a first terminal and a second terminal for connecting a power supply to the power tool. The power interface connects the power supply to the electric motor through the switch. Moreover, the power tool further includes a first detection module and a second detection module. The first detection module is electrically connected to the first terminal of the power interface and used for generating a first electrical signal after the power supply is connected to the power interface. The second detection module is electrically connected to the first terminal of the power interface through the switch and used for generating a second electrical signal when the power supply is connected to the power interface after the switch is turned on. After detecting the second electrical signal, the control module outputs the electric motor control signal according to a detection result of the first electrical signal. In this manner, whether the switch of the power tool is triggered and then the battery pack is inserted or the battery pack is inserted and then the switch is triggered can be determined according to the first electrical signal and the second electrical signal so that when the switch is triggered and then the battery pack is inserted, power-on protection can be performed on the power tool; and when the battery pack is inserted and then the switch is triggered, the electric motor is controlled to start normally, thereby avoiding safety hazards caused by the accidental start-up of the power tool when the battery pack is inserted.

### BRIEF DESCRIPTION OF THE DRAWINGS

FIG. 1 is a perspective view of a hedge trimmer according to an example of the present application.
FIG. 2 is a circuit block diagram of a power tool according to an example of the present application.
FIG. 3 is an equivalent circuit diagram of a power tool according to an example of the present application.
FIG. 4 is a comparison diagram of decay waveforms of a first charging module of a battery in different states according to an example of the present application.
FIG. 5 is a circuit block diagram of another power tool according to an example of the present application.
FIG. 6 is a block diagram of a power tool system according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

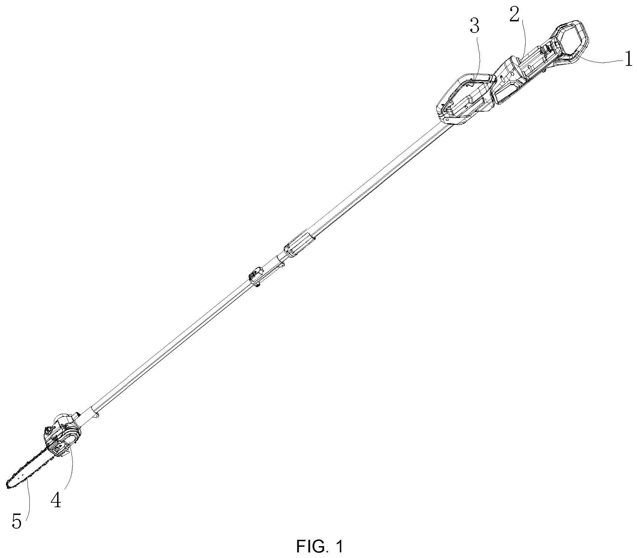

FIG. 1 is a perspective view of a hedge trimmer according to an example of the present application. Referring to FIG. 1, the power tool provided in the present application may be a hedge trimmer. In this example, the case where the power tool is specifically a hedge trimmer is used as an example, but the type of the power tool provided in this example is not limited. All power tools that can adopt the technical solution provided in this example are included in the protection scope of this example, and the details are not repeated below.

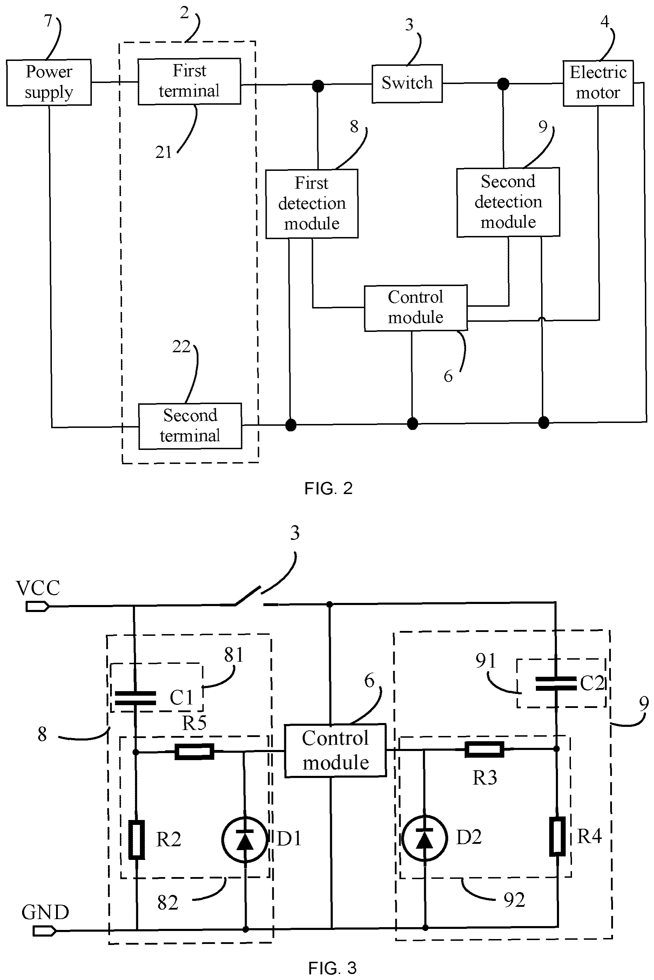

The hedge trimmer may be held by the user to trim and shape plants. FIG. 2 is a circuit block diagram of a power tool according to an example of the present application. FIG. 3 is an equivalent circuit diagram of a power tool according to an example of the present application. In conjunction with FIGS. 1 to 3, a hedge trimmer 100 provided in this example includes a handheld handle 1, a power interface 2, a switch 3, an electric motor 4, a chain blade 5, and a control module 6. The handheld handle 1 is used for the user to hold so that the user can control the trimming range of the hedge trimmer 100. The power interface 2 includes a first terminal 21 and a second terminal 22 for connecting a power supply 7 to the hedge trimmer 100. The power supply 7 may include, but is not limited to, an external alternating current power supply or an external direct current power supply. In an exemplary example, the power supply 7 is a rechargeable battery pack. The power interface 2 connects the power supply 7 to the electric motor 4 through the switch 3 to make the electric motor 4 operate. The electric motor 4 is used for driving the chain blade 5 to rotate so that the user can use the hedge trimmer 100 to trim plants. The control module 6 is used for outputting an electric motor control signal to control an operation state of the electric motor 4.

The hedge trimmer 100 further includes a first detection module 8 and a second detection module 9. The power supply 7 is separately connected to the first terminal 21 and the second terminal 22 of the power interface 2. The first detection module 8 is electrically connected to the first terminal 21, and the second detection module 9 is connected to the first terminal 21 through the switch. The first detection module 8 is used for generating a first electrical signal after the power supply 7 is connected to the power interface 2, and the second detection module 9 is used for generating a second electrical signal when the power supply 7 is connected to the power interface 2 after the switch 3 is turned on. The first detection module 8 and the second detection module 9 are connected to the control module 6 so that the first detection module 8 can send the first electrical signal to the control module 6, and the second detection module 9 can send the second electrical signal to the control module 6. In this manner, after detecting the second electrical signal, the control module 6 can output the electric motor control signal according to the detection result of the first electrical signal to control the operation state of the electric motor 4.

The power access point of the first detection module 8 is located between the first terminal 21 and the switch 3, and the power access point of the second detection module 9 is located between the switch 3 and the electric motor. Therefore, after the power supply is connected to the power interface, the first detection module 8 can generate the first electrical signal regardless of whether the switch 3 is turned on or not, and the second detection module 9 generates the second electrical signal only when the switch 3 is turned on and the power supply is connected to the power interface.

In an optional example, the first electrical signal is a voltage signal or a current signal, and/or the second electrical signal is a voltage signal or a current signal.

It is to be noted that the types of the first electrical signal and the second electrical signal may be the same or different, which is not specifically limited in this example, as long as the core inventive concept of this example can be achieved.

The detection result of the first electrical signal may include, but is not limited to, whether the first electrical signal is detected or the order in which the first electrical signal and the second electrical signal are detected. The electric motor control signal includes, but is not limited to, an electric motor operation signal for making the electric motor 4 operate according to a target working mode, a signal for prohibiting the electric motor 4 from starting, and/or a safety mode control signal for making the electric motor 4 operate at a low speed. The target working mode is set by the user, for example, making the electric motor 4 operate at a specific torque or rotational speed.

In an optional example, that after detecting the second electrical signal, the control module 6 outputs the electric motor control signal according to the detection result of the first electrical signal includes that after detecting the second electrical signal, through comparison, the control module 6 acquires the difference between the time when the first electrical signal is acquired and the time when the second electrical signal is acquired. When the difference between the time when the first electrical signal is acquired and the time when the second electrical signal is acquired is greater than or equal to the set time, it indicates that the time when the power supply is inserted into the power tool is earlier than the time when the switch 3 is turned on. In this case, the control module 6 outputs the electric motor operation signal for making the electric motor 4 operate according to the target working mode. On the contrary, when the difference between the time when the first electrical signal is acquired and the time when the second electrical signal is acquired is less than the set time, it indicates that the time when the switch 3 is turned on is earlier than the time when the power supply is inserted into the power tool. In this case, the control module 6 outputs the safety mode control signal for prohibiting the electric motor 4 from starting or making the electric motor 4 operate at a low speed, thereby avoiding safety hazards caused by the sudden start-up of the power tool. The set time is set according to the parameters of components in the first detection module 8 and the second detection module 9.

In this example, the power tool includes an electric motor, a control module, a power interface, and a switch. The control module is used for outputting an electric motor control signal to control an operation state of the electric motor. The power interface includes a first terminal and a second terminal for connecting a power supply to the power tool. The power interface connects the power supply to the electric motor through the switch. Moreover, the power tool further includes a first detection module and a second detection module. The first detection module is electrically connected to the first terminal of the power interface and used for generating a first electrical signal after the power supply is connected to the power interface. The second detection module is electrically connected to the first terminal of the power interface through the switch and used for generating a second electrical signal when the power supply is connected to the power interface after the switch is turned on. After detecting the second electrical signal, the control module outputs the electric motor control signal according to a detection result of the first electrical signal. In this manner, whether the switch of the power tool is triggered and then the battery pack is inserted or the battery pack is inserted and then the switch is triggered can be determined according to the first electrical signal and the second electrical signal so that when the switch is triggered and then the battery pack is inserted, power-on protection can be performed on the power tool; and when the battery pack is inserted and then the switch is triggered, the electric motor is controlled to start normally, thereby avoiding safety hazards caused by the accidental start-up of the power tool when the battery pack is inserted.

Optionally, referring to FIGS. 2 and 3, the first terminal 21 is connected to a first end of the first detection module 8 and connected to a first end of the second detection module 9 through the switch 3, the second terminal 22 is connected to a second end of the first detection module 8 and a second end of the second detection module 9, each of the first detection module 8 and the second detection module 9 has a third end, and the third end of the first detection module 8 and the third end of the second detection module 9 are connected to the control module 6 and used for outputting the first electrical signal and the second electrical signal to the control module 6, respectively. In this manner, the power supply can supply power to the first detection module 8 and the second detection module 9 so that the first detection module 8 can generate the first electrical signal, the second detection module 9 can generate the second electrical signal, the first detection module 8 and the second detection module 9 can output the first electrical signal and the second electrical signal to the control module 6, respectively, and the control module 6 can output the electric motor control signal according to the first electrical signal and the second electrical signal.

Optionally, referring to FIG. 3, the first detection module 8 includes a first charging unit 81 and a first charging response unit 82. The first charging unit 81 is electrically connected to the first terminal 21 of the power interface 2 and used for generating a first voltage after the power supply 7 is connected to the power interface 2. The first charging response unit 82 is electrically connected to the first charging unit 81. After the power supply 7 is connected to the power interface 2, the first charging response unit 82 outputs the first electrical signal in response to the first voltage generated by the first charging unit 81.

Specifically, after the power supply 7 is connected to the power interface 2, the first charging unit 81 is electrically connected to the power supply 7 through the power interface 2 so that the first charging unit 81 senses the voltage of the power supply 7 to generate the first voltage. Since the first charging response unit 82 is electrically connected to the first charging unit 81, the first charging response unit 82 can output the first electrical signal in response to the first voltage generated by the first charging unit 81.

In an optional example, the first charging unit 81 includes at least one first capacitor C1 connected in parallel with each other and having the same capacity so that the first charging unit 81 can generate the first voltage after the power supply is connected to the power interface.

The fact that the first charging unit 81 includes at least one first capacitor C1 may be understood as that the first charging unit 81 includes one first capacitor C1 or multiple first capacitors C1. When the first charging unit 81 includes multiple first capacitors C1, the first capacitors C1 have the same capacity so that the first voltage generated by the first charging unit 81 is stable.

It is to be noted that FIG. 2 only exemplarily shows the case where the first charging unit 81 includes one first capacitor C1 and does not limit the number of the first capacitors C1, as long as the core inventive concept of this example can be achieved.

Optionally, with continued reference to FIG. 2, the first charging response unit 82 includes a first voltage regulator branch electrically connected to the first charging unit 81 and the second terminal 22. The first voltage regulator branch is turned on in reverse through the first voltage generated by the first charging unit 81 to stabilize the voltage generated by the first charging unit 81 within a voltage range receivable by the control module 6.

Specifically, after the power supply 7 is connected to the power interface, the first charging unit 81 senses the voltage of the power supply 7 to generate the first voltage, and the first voltage regulator branch is turned on in reverse through the first voltage generated by the first charging unit 81 to stabilize the voltage generated by the first charging unit 81 within a voltage range receivable by the control module 6.

In an optional example, the first voltage regulator branch includes a first current limiting resistor R5 and a first Zener diode D1. An end of the first current limiting resistor R5 is electrically connected to the first charging unit 81, the other end of the first current limiting resistor R5 is electrically connected to the cathode of the first Zener diode D1, and the anode of the first Zener diode D1 is electrically connected to the second terminal 22 so that the first voltage regulator branch can be turned on in reverse through the first voltage to stabilize the voltage generated by the first charging unit 81 within a voltage range receivable by the control module 6.

In an optional example, the first charging response unit 82 further includes a first discharging branch. The first discharging branch is electrically connected to the first charging unit 81 and the second terminal 22. The first discharging branch is used for releasing electric charges stored in the first charging unit 81.

In an optional example, the first discharging branch includes a first discharging resistor R2.

Specifically, after the power supply 7 is connected to the power interface, the power supply 7 charges the first charging unit 81 so that the first charging unit 81 can generate the first voltage. To ensure that the voltage of the first charging unit 81 can still change when the power supply 7 is disconnected from the power interface and then connected to the power interface again, the electric charges stored in the first charging unit 81 need to be released after the power supply is disconnected from the power interface. Therefore, the first discharging branch is provided between the first charging unit 81 and the second terminal 22 so that the first discharging branch can release the electric charges stored in the first charging unit 81 after the power supply is disconnected from the power interface.

The second detection module 9 includes a second charging unit 91 and a second charging response unit 92. The second charging unit 91 is electrically connected to the first terminal 21 of the power interface 2 through the switch 3 and used for generating a second voltage when the power supply 7 is connected to the power interface 2 after the switch 3 is turned on. The second charging response unit 92 is electrically connected to the second charging unit 91. After the power supply 7 is connected to the power interface 2, the second charging response unit 92 outputs the second electrical signal in response to the second voltage generated by the second charging unit 91.

Specifically, after the power supply 7 is connected to the power interface 2, the second charging unit 91 is electrically connected to the power supply 7 through the power interface 2 so that the second charging unit 91 senses the voltage of the power supply 7 to generate the second voltage. Since the second charging response unit 92 is electrically connected to the second charging unit 91, the second charging response unit 92 can output the second electrical signal in response to the second voltage generated by the second charging unit 91.

In an optional example, the second charging unit 91 includes at least one second capacitor C2 connected in parallel with each other and having the same capacity.

The fact that the second charging unit 91 includes at least one second capacitor C2 may be understood as that the second charging unit 91 includes one second capacitor C2 or multiple second capacitors C2. When the second charging unit 91 includes multiple second capacitors C2, the second capacitors C2 have the same capacity so that the second voltage generated by the second charging unit 91 is stable.

It is to be noted that FIG. 2 only exemplarily shows the case where the second charging unit 91 includes one second capacitor C2 and does not limit the number of the second capacitors C2, as long as the core inventive concept of this example can be achieved.

In an optional example, the second charging response unit 92 includes a second voltage regulator branch electrically connected to the second charging unit 91 and the second terminal 22. The second voltage regulator branch is turned on in reverse through the voltage generated by the second charging unit 91 to stabilize the voltage generated by the second charging unit 91 within a voltage range receivable by the control module 6.

Specifically, after the power supply 7 is connected to the power interface, the second charging unit 91 senses the voltage of the power supply 7 to generate the second voltage, and the second voltage regulator branch is turned on in reverse through the second voltage generated by the second charging unit 91 to stabilize the voltage generated by the second charging unit 91 within a voltage range receivable by the control module 6.

In an optional example, the second voltage regulator branch includes a second current limiting resistor R3 and a second Zener diode D2; an end of the second current limiting resistor R3 is electrically connected to the second charging unit 91, and the other end of the second current limiting resistor R3 is electrically connected to the cathode of the second Zener diode D2; the anode of the second Zener diode D2 is electrically connected to the second terminal 22 so that the second voltage regulator branch can be turned on in reverse through the second voltage to stabilize the voltage generated by the second charging unit 91 within a voltage range receivable by the control module 6.

In an optional example, the second charging response unit 92 further includes a second discharging branch electrically connected to the second charging unit 91 and the second terminal 22; and the second discharging branch is used for releasing electric charges stored in the second charging unit 91.

In an optional example, the second discharging branch includes a second discharging resistor R4.

Specifically, after the power supply 7 is connected to the power interface and the switch 3 is triggered, the power supply 7 charges the second charging unit 91 so that the second charging unit 91 can generate the second voltage. To ensure that the voltage of the second charging unit 91 can still change when the power supply 7 is disconnected from the power interface and then connected to the power interface again or when the switch 3 is turned off and then triggered again, the electric charges stored in the second charging unit 91 need to be released after the power supply 7 is disconnected from the power interface or the switch 3 is turned off. Therefore, the second discharging branch is provided between the second charging unit 91 and the second terminal 22 so that the second discharging branch can release the electric charges stored in the second charging unit 91 after the power supply 7 is disconnected from the power interface or the switch 3 is turned off.

Optionally, the parameters of the components in the first detection module 8 and the second detection module 9 are the same so that the charging time of the first charging unit 81 and the charging time of the second charging unit 91 are the same, and the first voltage generated by the first charging unit 81 and the second voltage generated by the second charging unit 91 are the same. In this manner, the decay waveforms of the first charging unit 81 and the second charging unit 91 are consistent, which is conducive to improving the accuracy of the electric motor control signal outputted by the control module 6 and further avoiding safety hazards caused by the sudden start-up of the power tool.

In an optional example, that after detecting the second electrical signal, the control module 6 outputs the electric motor control signal according to the detection result of the first electrical signal includes: when the second electrical signal is detected and the first electrical signal is not detected within a first time interval, outputting the electric motor operation signal to make the electric motor 4 operate according to the target working mode.

The first time interval is set according to the signal delay time that may objectively exist in the circuit. In an optional example, the first time interval is greater than or equal to the signal delay time that may objectively exist in the circuit, thereby ensuring that the first electrical signal can be detected when the power supply is connected to the power interface.

It is to be understood that since the first detection module outputs the first electrical signal when the power supply is connected to the power interface, the moment when the control module receives the first electrical signal may be considered as the moment when the power supply is connected to the power interface; and when the power supply is connected to the power interface and the switch is turned on, the second detection module outputs the second electrical signal so that the moment when the control module receives the second electrical signal may be considered as the moment when the switch is turned on. Therefore, if the first electrical signal is detected within an extremely short period (that is, the first time interval) after the second electrical signal is detected, it may be determined that the moment when the power supply is connected to the power interface is equal to or approximately equal to the moment when the switch is turned on. Therefore, there is a high probability that the switch is in an on state before the power supply is connected to the power interface, and the electric motor needs to be controlled in a safety mode. On the contrary, if the first electrical signal is not detected within an extremely short period (that is, the first time interval) after the second electrical signal is detected, it may be determined that the moment when the power supply is connected to the power interface is far earlier than the moment when the switch is turned on, indicating a high probability that the power tool is started normally, so the electric motor operation signal may be outputted to make the electric motor operate according to the target working mode.

It is worth mentioning that, in the example shown in FIG. 3, the control module is connected to the power supply through the switch. Therefore, the control module is powered on and starts operating only after the power supply is connected to the power interface and the switch is turned on, that is, the first electrical signal and the second electrical signal can be detected in this case. When the power supply is disconnected from the power interface or the switch is turned off, the control module loses power and enters a shutdown state.

When the second electrical signal is detected and the first electrical signal is detected within the first time interval, the power-on time of the first detection module 8 is determined according to the signal parameter of the first electrical signal; and if the power-on time is greater than a second time interval, the electric motor operation signal is outputted to make the electric motor 4 operate according to the target working mode.

The power-on time may be understood as the total duration during which the power supply is connected to the power interface. In this example, the power-on time may also be understood as the duration during which the first electrical signal is detected. That the power-on time of the first detection module 8 is determined according to the signal parameter of the first electrical signal may specifically be that the power-on time of the first detection module 8 is determined according to the decay waveform of the first electrical signal.

Furthermore, when the first electrical signal and the second electrical signal vary with time, such as in the circuit shown in FIG. 3, based on the electrical characteristics of the capacitor, at the moment when the power supply is connected to the power interface, C1 is turned on and enters a charging state, and the control module can detect the first electrical signal. As time goes by, C1 stores electrical energy and the voltage drop gradually increases, causing the first electrical signal to gradually decay until the voltage of C1 stabilizes and the power supply is disconnected from the power interface. Similarly, at the moment when the power supply is connected to the power interface and the switch is turned on, C2 is turned on and enters the charging state, and the control module can detect the second electrical signal. As time goes by, C2 stores electrical energy and the voltage drop gradually increases, causing the second electrical signal to gradually decay until the voltage of C2 stabilizes and the power supply is disconnected from the power interface. Therefore, the decay duration of the first electrical signal may be determined according to the signal parameter of the first electrical signal and the decay law of the preceding electrical signal so that the power-on time of the first detection module, that is, the time when the power supply is connected to the power tool, can be roughly deduced.

The second time interval is set mainly considering the user's operation time, that is, the second time interval may be greater than or equal to the duration during which the user operates the switch 3 to turn off or trigger the switch 3 after the power supply is connected to the power tool. Specifically, the second time interval may be the normal duration or the shortest duration during which the user performs the preceding operation.

Specifically, when the second electrical signal is detected but the first electrical signal is not detected within the first time interval, it indicates that when the second electrical signal is detected, the charging of the first charging unit 81 is already completed. Therefore, the first charging unit 81 no longer generates the first voltage, indicating that the time when the power supply 7 is inserted into the power tool is earlier than the time when the switch 3 is turned on, and thus start-up protection does not need to be performed on the power tool. In this case, the control module 6 outputs the electric motor operation signal for making the electric motor 4 operate according to the target working mode so that the power tool can operate normally.

On the contrary, when the second electrical signal is detected and the first electrical signal is detected within the first time interval, it indicates that the second electrical signal and the first electrical signal are triggered simultaneously. In this case, it can be determined that the time when the switch 3 is turned on is earlier than the time when the power supply 7 is inserted into the power tool. Furthermore, when the power-on time is greater than the second time interval, it indicates that the user has enough time to operate the switch 3 after the power supply 7 is connected to the power tool. Therefore, it is possible that the user manually turns on the switch after the power supply is connected to the power tool so that start-up protection does not need to be performed on the power tool. In this case, the control module 6 outputs the electric motor operation signal for making the electric motor 4 operate according to the target working mode so that the power tool can operate normally. When the power-on time is less than or equal to the second time interval, since the time when the switch 3 is turned on is earlier than the time when the power supply 7 is inserted into the power tool and the user does not have enough time to operate the switch 3 after the power supply 7 is connected to the power tool, start-up protection needs to be performed on the power tool. In this case, the control module 6 outputs the safety mode control signal for prohibiting the electric motor 4 from starting or making the electric motor 4 operate at a low speed, thereby avoiding safety hazards caused by the sudden start-up of the electric motor 4.

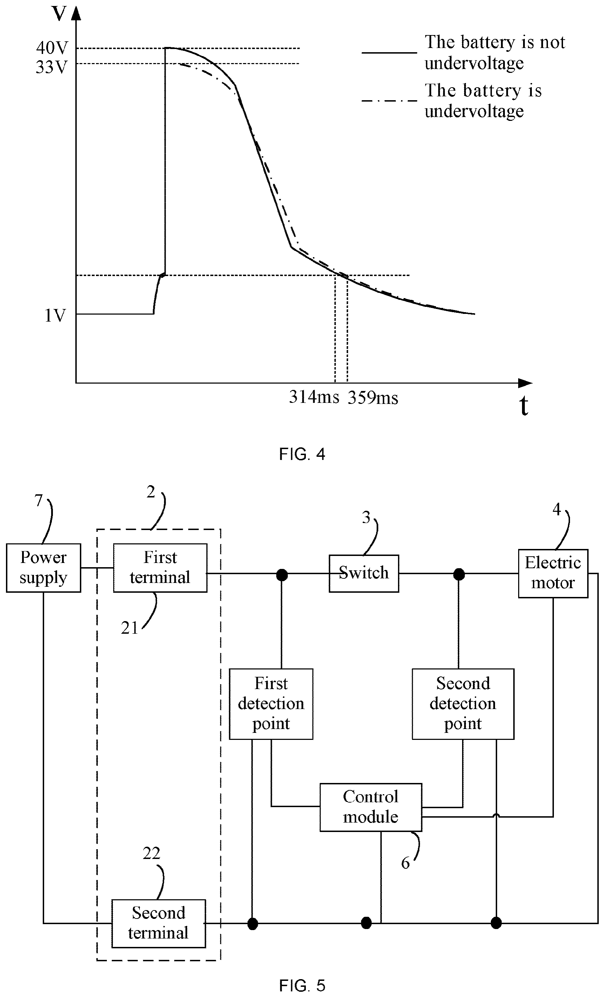

When the connected power supply 7 is a battery pack, the decay waveform of the first electrical signal may change due to reasons such as battery undervoltage. FIG. 4 is a comparison diagram of decay waveforms of a first charging module of a battery in different states according to an example of the present application. Referring to FIG. 4, it can be seen that when the battery is not undervoltage, the duration during which the voltage of the first charging module decays from 40 V to 1 V is 314 ms, and when the battery is undervoltage, the duration during which the voltage of the first charging module decays from 33 V to 1 V is 359 ms.

Therefore, in an optional example, the power-on time of the first detection module 8 may be determined according to the signal parameter of the first electrical signal and the signal parameter of the second electrical signal so that the power-on time of the first detection module 8 can be accurately determined even when the battery is undervoltage. It is not difficult to understand that when similar cases such as battery undervoltage occur, not only does the signal parameter of the first electrical signal change, but also the signal parameter of the second electrical signal undergoes equivalent changes. When the second electrical signal is detected, the second electrical signal is newly generated and has not yet undergone significant changes over time. Therefore, the signal parameter of the second electrical signal at this moment can accurately reflect to a certain extent whether the power supply is undervoltage. In this manner, the changing waveform of the first electrical signal can be adjusted with reference to the signal parameter of the second electrical signal, thereby more accurately determining the decay time corresponding to the first electrical signal through the adjusted waveform.

If the power-on time is less than or equal to the second time interval, the safety mode control signal is generated, thereby controlling the electric motor 4 to be in a stop state or a low-speed operation state.

In an optional example, after the control module 6 is powered off, that is, after the power supply is disconnected from the power tool, the safety mode control signal is eliminated so that the safety start function of the power tool is still valid when the power supply is connected to the power tool next time.

Based on the same concept, the present application further provides another power tool. FIG. 5 is a circuit block diagram of another power tool according to an example of the present application. Referring to FIG. 5, the control module 6 of the power tool is configured to detect electrical signals at a first detection point and a second detection point; acquire a first real-time signal at the first detection point when detecting the electrical signal at the second detection point; and output the electric motor control signal according to the matching condition between the parameter of the first real-time signal and the pre-stored first signal parameter.

The first detection point is a position where an electrical signal is generated when the power supply is connected to the power interface 2. For example, the first detection point may be a point on the line between the power interface 2 and the switch 3. The second detection point is a position where an electrical signal is generated when the power supply is connected to the power interface 2 and the switch 3 is turned on. For example, the second detection point may be a point on the line between the switch 3 and the electric motor 4.

The parameter of the first real-time signal is the signal parameter of the electrical signal at the first detection point acquired in real time, such as the amplitude or the like. In an optional example, the first signal parameter is the signal parameter of the electrical signal that should be generated at the first detection point when the power supply is connected to the power interface 2. It is to be understood that when the connected power supply is a battery pack, the waveform of the first electrical signal may change due to reasons such as battery undervoltage. Therefore, in an optional example, the first signal parameter may be adjusted according to the electrical signal at the second detection point so that the first signal parameter can be corrected, thereby improving the accuracy of the electric motor control signal outputted by the control module 6. Specifically, first signal parameters corresponding to different power voltages may be pre-stored. For example, if the standard power voltage is 56 V, the first signal parameters corresponding to 56 V, 55.5 V, 55 V, and the like may be stored. When the electrical signal at the second detection point is detected, the current power voltage can be determined based on the electrical signal, thereby determining the specific first signal parameter.

Optionally, the duration for acquiring the first real-time signal is less than the safety response delay time.

The safety response time may be understood as the time required for the electric motor 4 to start, that is, the maximum time required from the time when the electric motor 4 is powered on to the time when the electric motor 4 starts to operate.

Since the electric motor control signal needs to be outputted according to the matching condition between the parameter of the first real-time signal and the first signal parameter, the longer the duration for acquiring the first real-time signal is, the more accurate the matching condition between the parameter of the first real-time signal and the first signal parameter is, and the more accurate the finally outputted electric motor control signal is. However, when the duration for acquiring the first real-time signal is too long, the electric motor control signal may be outputted after the electric motor 4 has been started, thereby causing the safety start function of the power tool to fail. Therefore, the duration for acquiring the first real-time signal is less than the safety response delay time so that the electric motor control signal is outputted before the electric motor 4 is started, thereby ensuring that the electric motor 4 can operate according to the electric motor control signal outputted by the control module 6. In this manner, the safety start function of the power tool can be implemented.

The matching condition between the parameter of the first real-time signal and the pre-stored first signal parameter includes: when the difference between the amplitude of the first real-time signal and the amplitude of the first signal parameter is less than or equal to a first preset value, determining that the parameter of the first real-time signal matches the pre-stored first signal parameter. On the contrary, when the difference between the amplitude of the first real-time signal and the amplitude of the first signal parameter is greater than the first preset value, it is determined that the parameter of the first real-time signal does not match the pre-stored first signal parameter.

The electric motor control signal may include, but is not limited to, the electric motor operation signal for making the electric motor 4 operate according to the target working mode, the signal for prohibiting the electric motor 4 from starting, and/or the safety mode control signal for making the electric motor 4 operate at a low speed.

In some examples, that the electric motor control signal is outputted according to the matching condition between the parameter of the first real-time signal and the pre-stored first signal parameter includes the following: when the parameter of the first real-time signal matches the pre-stored first signal parameter, it indicates that the electrical signal at the first detection point and the electrical signal at the second detection point are detected simultaneously and further indicates that the time when the switch 3 is turned on is earlier than the time when the power supply 7 is inserted into the power tool so that start-up protection needs to be performed on the power tool. In this case, the control module 6 outputs the safety mode control signal for prohibiting the electric motor 4 from starting or making the electric motor 4 operate at a low speed, thereby avoiding safety hazards caused by the sudden start-up of the electric motor 4. On the contrary, when the parameter of the first real-time signal does not match the pre-stored first signal parameter, it indicates that the control module 6 detects the electrical signal at the first detection point before detecting the electrical signal at the second detection point and further indicates that the time when the power supply 7 is inserted into the power tool is earlier than the time when the switch 3 is turned on so that start-up protection does not need to be performed on the power tool. In this case, the control module 6 outputs the electric motor operation signal for making the electric motor 4 operate according to the target working mode so that the power tool can operate normally.

In an optional example, when the difference between the amplitude of the first real-time signal and the amplitude of the first signal parameter is greater than the first preset value, the electric motor operation signal for making the electric motor 4 operate according to the target working mode is outputted.

Specifically, the control module 6 detects the electrical signals at the first detection point and the second detection point in real time. When the electrical signal at the second detection point is detected, the first real-time signal at the first detection point is acquired. When the difference between the amplitude of the first real-time signal and the amplitude of the first signal parameter is greater than the first preset value, it indicates that the parameter of the first real-time signal does not match the pre-stored first signal parameter. In this case, the control module 6 outputs the electric motor operation signal for making the electric motor 4 operate according to the target working mode so that the power tool can operate normally. Specifically, when the amplitude of the first real-time signal is compared with the amplitude of the first signal parameter, since the electrical signal generated at the first detection point actually changes over time and the changing waveform is related to the component parameter, it can be considered that during any start-up process, the waveform is fixed to a certain extent. In this manner, the comparison of amplitudes mapped onto the waveform can become a comparison of time, that is, the existence time of the first real-time signal can be determined through the amplitude of the first real-time signal. Based on this, the moment when the electrical signal at the second detection point is detected may be considered as the moment when the switch is turned off. The moment when the power supply is connected to the power tool may be determined through the existence time of the first real-time signal. Whether the switch is in the on state before the power supply is connected to the power tool can be roughly determined through the preceding two moments. Further, the corresponding electric motor control signal can be outputted based on the determination result. It is to be understood that, in addition to the amplitude, other signal parameters that can be applied to the waveform for comparison to determine the time difference may also be used in the examples of the present application to perform electric motor control.

Optionally, the control module 6 is configured to: acquire a second real-time signal at the second detection point and if the parameter of the second real-time signal matches the pre-stored second signal parameter, determine that the electrical signal at the second detection point is detected.

The parameter of the second real-time signal is the signal parameter of the electrical signal at the second detection point acquired in real time, such as the amplitude or the like. In an optional example, the pre-stored second signal parameter is a signal parameter of the electrical signal that should be generated at the second detection point when the power supply 7 is connected to the power interface 2 and the switch 3 is turned on.

In an optional example, the signal waveform corresponding to the first signal parameter is the same as the signal waveform corresponding to the second signal parameter. In this manner, the comparison and detection of the first real-time signal and the second real-time signal can be facilitated, which is more conducive to adjusting the signal parameter of one of the first real-time signal and the second real-time signal through the signal parameter of the other one of the first real-time signal and the second real-time signal.

In an optional example, the control module 6 is further configured to: determine whether the amplitude difference and/or phase difference between the second real-time signal and the second signal parameter are less than a second preset value and when the amplitude difference and/or phase difference between the second real-time signal and the second signal parameter are less than the second preset value, determine that the parameter of the second real-time signal matches the pre-stored second signal parameter.

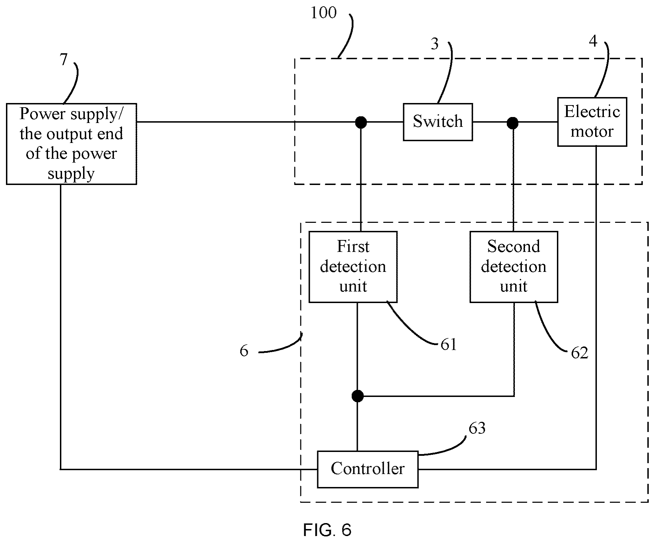

Based on the same concept, the example of the present application further provides a power tool system. FIG. 6 is a block diagram of a power tool system according to an example of the present application. Referring to FIG. 6, the power tool system includes a power tool 100, a power supply 7, and a control module 6. The power supply 7 is connected to the power tool 100. The power tool 100 includes the electric motor 4. The power supply 7 is used for supplying power to the electric motor 4. The power tool 100 further includes the switch 3 for connecting an output end of the power supply 7 to the electric motor 4. The power tool 100 further includes the control module 6 for performing preset processing to adjust an operation state of the electric motor 4.

In an optional example, the preset processing includes: controlling the power supply 7 to stop supplying power, controlling the switch 3 to be turned off, and/or outputting a safety mode control signal.

Optionally, the control module 6 includes a first detection unit 61 and a second detection unit 62. The first detection unit 61 is electrically connected to the output end of the power supply 7 and used for generating the first electrical signal after the power supply 7 is connected to the power tool. The second detection unit 62 is electrically connected to the output end of the power supply 7 through the switch 3 and used for generating the second electrical signal when the power supply 7 is connected to the power tool after the switch 3 is turned on. The control module 6 further includes a controller 63 for performing the preset processing to place the electric motor 4 in a safety mode according to a detection result of the first electrical signal after detecting the second electrical signal.

The first detection unit 61 is located between the output end of the power supply 7 and the switch 3, and the second detection unit 63 is located between the switch 3 and the electric motor 4. Therefore, after the power supply 7 is connected to the power tool, the first detection unit 61 can generate the first electrical signal regardless of whether the switch 3 is turned on or not, and the second detection unit 62 generates the second electrical signal only when the switch 3 is turned on and the power supply 7 is connected to the power tool.

In an optional example, when detecting the second electrical signal and detecting the first electrical signal within the first time interval, the controller 63 determines the power-on time of the first detection unit according to the signal parameter of the first electrical signal and if the power-on time is less than or equal to a preset time interval, performs the preset processing to place the electric motor 4 in the safety mode.

In some examples, the control module 6 is built into the power tool.

In some examples, the power supply 7 includes a battery pack, and the control module 6 is built into the battery pack.

In some examples, the power tool system further includes a power adapter, and the control module 6 is built into the power adapter.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
an electric motor (4);
a control module (6) for outputting an electric motor control signal to control an operation state of the electric motor;
a power interface (2) comprising a first terminal (21) and a second terminal (22) for connecting a power supply (7) to the power tool;
a switch (3) for connecting the power supply to the electric motor;
a first detection module (8) electrically connected to the first terminal of the power interface and used for generating a first electrical signal after the power supply is connected to the power interface; and
a second detection module (9) electrically connected to the first terminal of the power interface through the switch and used for generating a second electrical signal when the power supply is connected to the power interface after the switch is turned on;
wherein the control module is configured to, after detecting the second electrical signal, output the electric motor control signal according to a detection result of the first electrical signal.

2. The power tool of claim 1, wherein the first terminal is connected to a first end of the first detection module and connected to a first end of the second detection module through the switch, the second terminal is connected to a second end of the first detection module and a second end of the second detection module, and each of the first detection module and the second detection module has a third end, and the third end of the first detection module and the third end of the second detection module are connected to the control module and used for outputting the first electrical signal and the second electrical signal to the control module, respectively.

3. The power tool of claim 1, wherein the first detection module comprises a first charging unit (81) and a first charging response unit (82), the first charging unit is electrically connected to the first terminal of the power interface and used for generating a first voltage after the power supply is connected to the power interface; the first charging response unit is electrically connected to the first charging unit, and after the power supply is connected to the power interface, the first charging response unit outputs the first electrical signal in response to the first voltage generated by the first charging unit; and
the second detection module comprises a second charging unit (91) and a second charging response unit (92), the second charging unit is electrically connected to the first terminal of the power interface through the switch and used for connecting the power supply and generating a second voltage after the switch is turned on, the second charging response unit is electrically connected to the second charging unit, and after the power supply is connected to the power interface, the second charging response unit outputs the second electrical signal in response to the second voltage generated by the second charging unit.

4. The power tool of claim 3, wherein the first charging response unit comprises a first voltage regulator branch electrically connected to the first charging unit and the second terminal, and the first voltage regulator branch is turned on in reverse through the first voltage generated by the first charging unit to stabilize the first voltage generated by the first charging unit within a voltage range receivable by the control module; and
the second charging response unit comprises a second voltage regulator branch electrically connected to the second charging unit and the second terminal, and the second voltage regulator branch is turned on in reverse through the second voltage generated by the second charging unit to stabilize the second voltage generated by the second charging unit within a voltage range receivable by the control module.

5. The power tool of claim 4, wherein the first voltage regulator branch comprises a first current limiting resistor (R5) and a first Zener diode (D1), an end of the first current limiting resistor is electrically connected to the first charging unit, and another end of the first current limiting resistor is electrically connected to a cathode of the first Zener diode, and an anode of the first Zener diode is electrically connected to the second terminal; and
the second voltage regulator branch comprises a second current limiting resistor (R3) and a second Zener diode (D2), an end of the second current limiting resistor is electrically connected to the second charging unit, and another end of the second current limiting resistor is electrically connected to a cathode of the second Zener diode, and an anode of the second Zener diode is electrically connected to the second terminal.

6. The power tool of claim 3, wherein the first charging response unit further comprises a first discharging branch electrically connected to the first charging unit and the second terminal, and the first discharging branch is used for releasing electric charges stored in the first charging unit; and
the second charging response unit further comprises a second discharging branch electrically connected to the second charging unit and the second terminal, and the second discharging branch is used for releasing electric charges stored in the second charging unit.

7. The power tool of claim 3, wherein the first charging unit comprises at least one first capacitor connected in parallel with each other and having a same capacity, and the second charging unit comprises at least one second capacitor connected in parallel with each other and having a same capacity.

8. The power tool of claim 1, wherein the first electrical signal is a voltage signal or a current signal, and/or the second electrical signal is a voltage signal or a current signal.

9. The power tool of claim 1, wherein parameters of components in the first detection module and the second detection module are the same.

10. The power tool of claim 1, wherein the control module is configured to when the second electrical signal is detected and the first electrical signal is not detected within a first time interval, output an electric motor operation signal to make the electric motor operate according to a target working mode.

11. The power tool of claim 1, wherein the control module is configured to:
when the second electrical signal is detected and the first electrical signal is detected within a first time interval, determine power-on time of the first detection module according to a signal parameter of the first electrical signal; and
if the power-on time is greater than a second time interval, output an electric motor operation signal to make the electric motor operate according to a target working mode.

12. The power tool of claim 11, wherein the control module is configured to determine the power-on time of the first detection module according to the signal parameter of the first electrical signal and a signal parameter of the second electrical signal.

13. The power tool of claim 11, wherein the control module is configured to:
if the power-on time is less than or equal to the second time interval, generate a safety mode control signal, wherein the safety mode control signal is used for controlling the electric motor to be in a stop state or a low-speed operation state.

14. The power tool of claim 13, wherein after the control module is powered off, the safety mode control signal is eliminated.
